# EUROPEAN PATENT APPLICATION

(11) **EP 1 365 489 A1**
(43) Date of publication of application: **26.11.2003**
(21) Application number: 02710874.5
(22) Date of filing: 28.01.2002
(51) Int. Cl.: H01S 3/16

(54) **DOUBLE, OPTIONALLY DOPED, POTASSIUM-YTTERBIUM TUNGSTATE SINGLE CRYSTAL, PRODUCTION METHOD THEREFOR AND APPLICATIONS**

(30) Priority: 31.01.2001 ES 200100219
(71) Applicant: Fundacio Urv Universitat Rovira I Virgili, 43007 Tarragona (ES)
(72) Inventor: PUJOL BAIGES, Maria, Cinta, E-43007 Tarragona (ES); SOLE CARTANA, Rosa, E-43007 Tarragona (ES); AGUILO DIAZ, Magdalena, E-43007 Tarragona (ES); MATEOS FERRE, Xavier, E-43007 Tarragona (ES); MASSONS BOSCH, Jaume, E-43007 Tarragona (ES); DIAZ GONZALES, Francesc, E-43007 Tarragona (ES)
(74) Representative: Carpintero Lopez, Francisco
(86) International application number: ES0200035
(87) International publication number: WO02061896

(57) **Abstract**

The potassium ytterbium double wolframate single crystal, of formula [KYb(WO₄)₂], optionally doped with one or more ions of the rare earth elements, shows a crystallographic structure belonging to the monoclinic system, spatial group C2/c and is useful as material for visible spectrum emitting solid state lasers, in particular, for green and blue emission, pumped by infrared radiation diodes.

## Description

### FIELD OF THE INVENTION

This invention refers to a potassium ytterbium double wolframate single crystal, optionally doped with ions of rare earth elements, a procedure for the obtainment and applications thereof.

### BACKGROUND OF THE INVENTION

In the past few years, laser technology research has focused on the development of lasers emitting ever shorter wavelengths, and, therefore, with an ever increasing energy per photon. The growing need for green and blue lasers is determined both by the increased visualization capability (visual acuteness at this bandwidth is superior) displayed by these lasers and the increase in spatial resolution they achieve, which favors a greater miniaturization of the devices in which they can be used.

Presently there are two lines of research opened in order to achieve such goals, one of them comprising the development of semiconductor materials, mainly NGa based, which can give rise to green and blue emitting diode lasers, whilst the other is focused on the obtainment of such radiations (blue and green) from diode pumped solid state lasers which allow the obtainment of considerable energy levels and emit relatively broad wavelengths, from the infrared to the longest visible wavelength (red). In this way, diode pumped solid state lasers have been developed, useful in applications which require a high energy level but that are not extremely exacting as refers to signal stability, spectral quality or energy per photon.

The obtainment of blue or green emitting diode lasers clashes directly with the obstacle of having to apply very high polarization potentials, which hinder operation stability and negatively influence the useful life of the device. Although the development of blue diode lasers has been reported, the scientific community is not excessively optimistic as refers to the chances of implementing this type of lasers in industrial processes, which require stable features and sufficient working hours.

Presently, the most active and promising field of research for the obtainment of blue lasers takes advantage of the non-linear or quantum mechanic effects associated to crystalline materials. The present technology on solid state lasers allows to double or triplicate the frequency of an infrared light signal, which allows the obtainment of a green or blue light (at the ultraviolet limit) from the radiation emitted by a solid state laser having Nd as the active ion, for example, Nd:YAG (solid state laser using a cylindrical rod made of yttrium aluminum garnet doped with neodymium). The main problems facing this technology are due to the efficiency of the non linear conversion process of the infrared radiation into visible is drastically influenced by the alignment conditions of the set, the system's thermal stabilization, etc., which causes the system to drift away (even if very slightly) from the optimum working conditions, and, consequently, performance decreases to unacceptable values, hampering, in practice, the use of these devices under the extreme conditions required in industrial environments.

### SUMMARY OF THE INVENTION

The invention faces the problem of developing a material for the obtainment of visible range emitting solid state diodes, in particular, green or blue emission, pumped by an infrared radiation diodes.

The solution provided by this invention is based on the development of a single crystal with a potassium ytterbium double wolframate monoclinic structure, optionally doped with ions of rare earth elements, which efficiently transforms infrared radiation into green or blue radiation.

The solution provided by this invention takes advantage of the quantal conversion and cooperative luminescence associated to single crystal structures. Furthermore, the technology provided by this invention allows the generation of lasers, which show stable characteristics from the mechanical and thermal points of view and a much less critical operability as compared to conventional lasers.

An additional advantage of the solution provided by the present invention is that, by being based on the use of a single crystal, it meets the equipment miniaturization needs demanded by the market nowadays.

Therefore, an object of the present invention comprises a potassium ytterbium double wolframate single crystal of monoclinic structure, optionally doped with one or more ions of the rare earth elements, which efficiently transforms infrared radiation into green or blue radiation.

An additional object of the present invention is a procedure for the production of said single crystal.

A further object of this invention comprises the use of said single crystal in the manufacture of green or blue emitting solid state lasers, pumped by infrared radiation diodes.

### BRIEF DESCRIPTION OF THE INVENTION

Figure 1 is a graph showing the solubility curve of potassium ytterbium double wolframate (KYbW) in K₂W₂O₇.
Figure 2 is a picture of a KYbW single crystal provided by this invention.
Figure 3 is a graphical representation showing the location of the main optical axes of KYbW vs. the crystallographic axes.
Figure 4 is a graph showing the transparency range of KYbW.
Figure 5 is a graph showing the optical absorption spectrum of KYbW.
Figure 6 is an outline representation illustrating the blue luminescent emission process of KYbW.
Figure 7 is a set of graphs showing different optical absorption spectra of KYbW: Er³⁺.
Figure 8 is an outline representation illustrating the green luminescent emission process of KYbW.

### DETAILED DESCRIPTION OF THE INVENTION

The invention provides a potassium ytterbium double wolframate single crystal [KYb(WO₄)₂], hereinafter KYbW, optionally doped one or more ions of the rare earth elements.

In a particular embodiment, the single crystal provided by the present invention is a KYbW single crystal, whose production, structure and crystallographic morphology, as well as the optical characterization thereof are described in Example 1. This KYbW single crystal luminescently emits blue light (λ = 480 nm) when pumped by an infrared radiation diode (λ = 982 nm).

In another particular embodiment, the single crystal provided by the present invention is a KYbW single crystal doped with an ion of a rare earth element, for example, a lanthanide, such as erbium. The doping amount which may be present in the doped KYbW single crystal provided by this invention ranges from 0,1% to 20% of atoms of the doping element vs. potassium and ytterbium. Example 2 describes the obtainment of a KYbW single crystal doped with erbium [KYbW:Er] and its optical characterization. This KYbW:Er single crystal luminescently emits green light (λ = 530 nm) when pumped by an infrared radiation diode (λ = 982 nm).

The single crystals provided by this invention may be obtained by conventional methods, for instance, by using the top seeded solution growth technique (TSSG) using an appropriate solvent. Briefly, the raw materials are mixed, dissolved and homogenized in a crucible yielding a solution comprising the solvent and the solute, at a temperature above the saturation temperature, for an appropriate period of time, obtainment a solution showing both an axial and a radial thermal gradient in order to favor the nucleation on the center of the surface of the solution. Next, a KYbW seed is introduced held onto an alumina rod and fastened by a platinum wire, and is placed on the center of the surface of the solution to focus the crystalline growth at this single spot. Subsequently, the solution is cooled down slowly, by means of an appropriate thermal cycle, thus achieving the supersaturation of the solution and the formation of the single crystals that are withdrawn from the solution and slowly cooled to room temperature.

The single crystal provided by this invention may be used in the manufacture of green or blue emitting solid state diodes, pumped by an infrared radiation diode. These lasers show numerous applications, for instance, in the optical storage and reading of information, in industrial alignment and in the medical and surgical applications of lasers.

The following examples illustrate the invention and shall not be considered as limiting of the same.

### EXAMPLE 1

### Potassium ytterbium double wolframate single crystals

This example describes the production of KYb(WO₄)₂ [KYbW] single crystals in a single crystal form, the structure and crystallographic morphology thereof, as well as the optical characterization thereof.

### 1.1 KYbW crystal growth

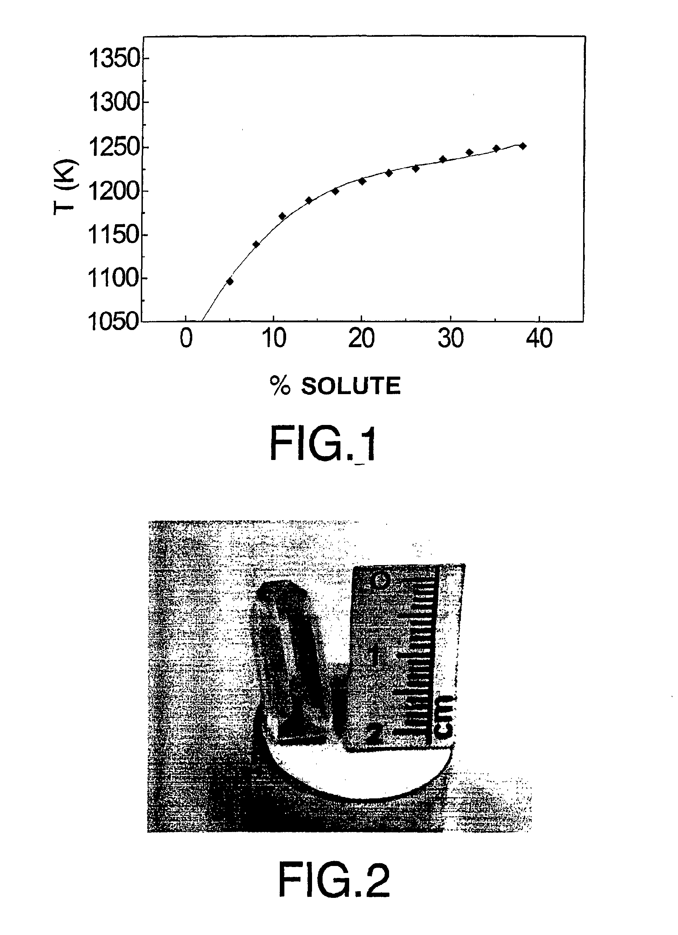

The growth method to produce KYbW single crystals used has been TSSG using K₂W₂O₇ as solvent. The solubility curve of KYbW in said solvent is shown in Figure 1.

Crystal growth experiments were carried out in a cylindrical vertical oven with AF Khantal resistance. The temperature was controlled with a precision of ± 0.1 K with an Eurotherm controller/programmer connected to a 10% Rh Pt-Pt thermocouple. Conical platinum crucibles were used having a volume of 25 cm³, a top diameter of 35 mm, a bottom diameter of 20 mm, and a height of 35 mm in order to prepare 50 g of the solution using the reactants K₂CO₃ (11.0384 g), Yb₂O₃ (1.9203 g) and WO₃ (39.2963 g) of Aldrich and Fluka (analytical purity grade of 99,9%). The mixture was homogenized maintaining the solution about 50 K above the saturation temperature for a period of time ranging from 5 to 6 hours. Then, the saturation temperature was determined by watching the growth/dissolution of a crystal seed in contact with the surface of the solution. In all the growth experiments, the saturation temperature was maintained in the range from 1,180 K to 1,188 K.

Growth processes start with KYbW parallelepiped seeds crystallographically oriented in contact with the center of the surface of the solution. The most recommended orientation of the seed is direction *b*. The axial thermal gradient in the solution used is 1 K/cm, being the bottom hotter than the surface. The radial thermal gradient is also 1 K/cm, being the walls of the crucible hotter than the center, thus favoring the nucleation on the center of the surface of the solution. Supersaturation was achieved by slowly cooling the temperature of the solution at a rate of 0,1 K for 10 K/h. The most convenient rotation of the crystal is 60 rpm thus assuring the growth in volume due to the convective flow around the crystal. In order to minimize thermal shocks, the single crystals were slowly removed from solution and were cooled to room temperature at a rate of 15 K/h.

Figure 2 shows an example of a KYbW single crystal obtained according to the previously described technique.

### 1.2 Crystallographic structure of KYbW

The crystallographic structure of KYbW belongs to the monoclinic system, spatial group C2/c, and its unit cell parameters are the following: a = 10.590(4) A, b = 10.290(6) A, c = 7.478(2) A and β = 130.70(2)°, with Z = 4.

The W⁶⁺ coordination polyhedron is a distorted octahedron, the W-O bonding distances are in the range: 1.755(6) - 2.327(6) A. The latter are joined one to the other by sharing the edges of the O(2)-O(2)ⁱ [(i) -x, -y, 1-z] type forming a double unit. These units are bonded among themselves, forming a chain that advances along the *c* direction sharing a vertex, the oxygen O(4).

The W-W¹ distance between polyhedrons sharing an edge is 3.266(2) A and when joining polyhedrons sharing vertexes is 3.739 (2) A.

It should be highlighted that the edge shared by octahedrons is the shortest O(2)-O(2)ⁱ bond in this coordination figure (the electronic density of O² will be lower since they share it with two different W⁶⁺ cations), following the same tendency, the second shortest edge will be the one shared with YbO₈.

There are four equivalent structural positions of Yb³⁺ in the unit cell. Ytterbium shows a coordination sphere of 8 oxygens, configuring a coordination polyhedron in the shape of a squared antiprism. Ytterbium is located at the atomic positions 2 (C₂), i.e., at the binary axis. The coordination polyhedron 8 comprises 6 shorter Yb-O distances in the interval 2.198(7)-2.312(6) A, and 2 longer ones (2.711(6) A).

These polyhedrons form a single chain in the (101) direction sharing an edge, O(3)-O(3)ⁱ, between two consecutive polyhedrons.

The shortest distance between Yb-Yb within the lattice is 4.049 A. The coordination polyhedrons of these 2 ytterbium atoms belong to the same chain.

The K⁺ cation is also located on the binary axis, just like the Yb³⁺. It shows a coordination of 12 oxygens around it, with distances ranging from 2.706(8)-3.430(8) A. Its coordination polyhedron is a distorted icosahedron. These polyhedrons are joined by sharing the edges along the (101) and (110) directions, thus forming a bidimensional layer. These chains fill the holes in the wolfram and ytterbium polyhedrons lattice.

All the polyhedrons with the structure of KYbW are related among themselves by the O²⁻ anions. The coordination figures of the Yb³⁺ and W⁶⁺ cations, share an edge of the O(2)-O(3) type which is one of the shortest distances between the oxygens, within the structure of the KYbW. It is also observed that YbO₈ and KO₁₂, alternatively, form a chain parallel to the double chains of the W octahedrons, along the crystallographic direction *c*. These chain advances by sharing 2 edges, O(1 )-O(3) and O(1)-O(2).

The potassium polyhedron is located between 3 different W double chains sharing 4 edges with 4 different octahedrons belonging to a single W double chain, whilst it shares only 2 edges per each double chain with the other 2 W chains.

Tables 1-3 show the structural data of the crystal and the resolution conditions of the structure by X ray diffraction of the single crystal (Table 1), as well as the atomic coordinates of the atoms within the elemental cell (Table 2) and of a selection of the interatomic distances (Table 3).

**Table 1**

| **Structural data and conditions of resolution of the KYbW structure** | |
|---|---|
| Crystal data | |
| KYb(WO₄)₂ | K_{α} Mo radiation |
| Molecular weight: 707.84 | λ: 0.71069 A |
| Monoclinic | Cell parameters after 25 reflections |
| a = 10.590(4) A | θ:12-21° |
| b = 10.290(6) A | µ: 52.840 mm⁻¹ |
| c = 7.478(2) A | T: 293(2) K |
| β = 130.70(2)° | Sphere |
| V = 617.8(5) A³ | 0.2 mm in diameter |
| Z = 4 | Colorless |
| Dₓ: 7.610 Mgm⁻³ | |
| Dₘ: (not measured) | |

| Data collection | |
|---|---|
| Enraf-Nonius CAD4 Diffractometer | Rᵢₙₜ: 0.0457 |
| ω-2θ sweeps | θₘₐₓ: 30.07° |
| Absorption correction: spherical | h: -14→11 |
| 1875 reflections measured | k: 0→14 |
| 976 independent reflections | l: 0→10 |
| 837 reflections with 1>2σ(l) | Frequency of 3 standard |
| | reflections: 120 minutes |
| | Intensity decrease: none |

| Fine Adjustment | |
|---|---|
| Fine adjustment on F² R[F²>2σ(F²)]: 0.0445 | Δρₘₐₓ: 0.465 eA |
| wR(F²): 0.1106 | Δρₘᵢₙ:-0.143 eA |
| | Extinction correction: none |
| S: 1.104 | |
| 909 Reflections | |
| 56 parameters | |
| w: 1/[σ²(F₀²) + (0.1000P)² | Dispersion factors from |
| | *International Tables for* |
| | *Crystallography (Vol. C)* |
| Where P: (F₀² + 2F_{c}²)/3 | |
| (Δ/σ)ₘₐₓ: 0.007 | |

**Table 2**

| **Atomic coordinates within the unit cell** | | | | | |
|---|---|---|---|---|---|
| Atom | Wyckoff Position | *x* | *y* | *z* | U(eq) |
| Yb | 4e | 0 | 0.72860 | 0.2500 | 0.0060 |
| | | | (6) | | (2) |
| W | 8f | 0.19722 | -0.00004 | 0.73560 | 0.0045 |
| | | (5) | (3) | (6) | (2) |
| K | 4e | 0.5000 | 0.2049 | 0.7500 | 0.0145 |
| | | | (4) | | (6) |
| 01 | 8f | 0.3736 | -0.0860 | 0.8115 | 0.0110 |
| | | (8) | (8) | (11) | (13) |
| 02 | 8f | 0.0241 | -0.1103 | 0.4636 | 0.0067 |
| | | (8) | (7) | (11) | (11) |
| 03 | 8f | 0.2783 | 0.1584 | 0.8732 | 0.0050 |
| | | (7) | (6) | (10) | (11) |
| 04 | 8f | 0.1907 | -0.0784 | 0.9378 | 0.0091 |
| | | (8) | (7) | (11) | (12) |

**Table 3**

| **Interatomic distances in KYbW** | | | | | | | |
|---|---|---|---|---|---|---|---|
| W-04 | 1.755 | Yb-02ⁱⁱⁱ | 2.198 | K-04^{vii} | 2.706 | W-Wⁱ | 3.266 |
| | (6) | | (7) | | (8) | | (2) |
| W-01 | 1.792 | Yb-01^{iv} | 2.226 | K-04ⁱⁱ | 2.811 | W-Wⁱⁱ | 3.739 |
| | (7) | | (7) | | (7) | | (2) |
| W-03 | 1.817 | Yb-03^{v} | 2.312 | K-01ⁱⁱ | 2.884 | W-W^{ix} | 3.739 |
| | (6) | | (6) | | (7) | | (2) |
| W-02 | 1.980 | Yb-03^{vi} | 2.711 | K-02^{viii} | 2.997 | | |
| | (6) | | (6) | | (7) | | |
| W-02ⁱ | 2.109 | | | K-03 | 3.068 | W-Yb^{x} | 3.531 |
| | (6) | | | | (6) | | (2) |
| W-04ⁱⁱ | 2.327 | | | K-01 | 3.430 | W-Yb^{xi} | 3.811 |
| | (6) | | | | (8) | | (2) |
| | | | | | | W-Yb^{xii} | 3.921 |
| | | | | | | | (2) |
| | | | | | | W-Yb^{xiii} | 3.931 |
| | | | | | | | (2) |
| | | | | | | W-K^{ix} | 3.665 |
| | | | | | | | (3) |
| | | | | | | W-K^{xiv} | 3.726 |
| | | | | | | | (4) |
| | | | | | | W-K | 3.780 |
| | | | | | | | (3) |
| | | | | | | Yb-K^{v} | 3.7469 |
| | | | | | | | (10) |
| | | | | | | Yb-K^{xv} | 3.7469 |
| | | | | | | | (10) |

| | | | | | | | |
|---|---|---|---|---|---|---|---|
| i: -x, -y, -z vii: 1/2+x, 1/2+y, z xiii:x,y-1,z | | | | | | | |
| ii: x, ∼y, z-1/2 viii: 1/2-x, 1/2+y, 3/2-z xiv: x-1/2, y-1/2, z | | | | | | | |
| iii: x, 1 +y, z ix: x, -y, ½+z xv: x-1/2, 1/2+y, z | | | | | | | |
| iv: 1/2-x, 1/2-y, 1-z x: x, 1-y, 1/2+z | | | | | | | |
| v: x-1/2, 1/2+y, z-1 xi: 1/2+x, y-1/2, 1+z | | | | | | | |
| vi: x, 1-y, z-1/2 xii: 1/2+x, 1/2-y, 1/2+z | | | | | | | |

### 1.3 Morphology of KybW

KYbW shows a crystalline habit comprising the faces (110), (111), (010) and (310). The three first ones are clearly more developed than the other one.

It can be seen in the growth of these single crystals that the habit along the *c* direction is larger (approximately double) than in the other two crystallographic directions.

### 1.4 Optical characterization of KYbW

### 1.4.1 Main optical axes

KYbW shows a marked optical anisotropy due to its monoclinic nature. Therefore, it is necessary to know the position of the main optical axis vs. the crystallographic axes of this material. The main optical axes are those corresponding to the optical directions where the refraction indexes are maximum, medium and minimum respectively (herein named Ng, Nm and Np).

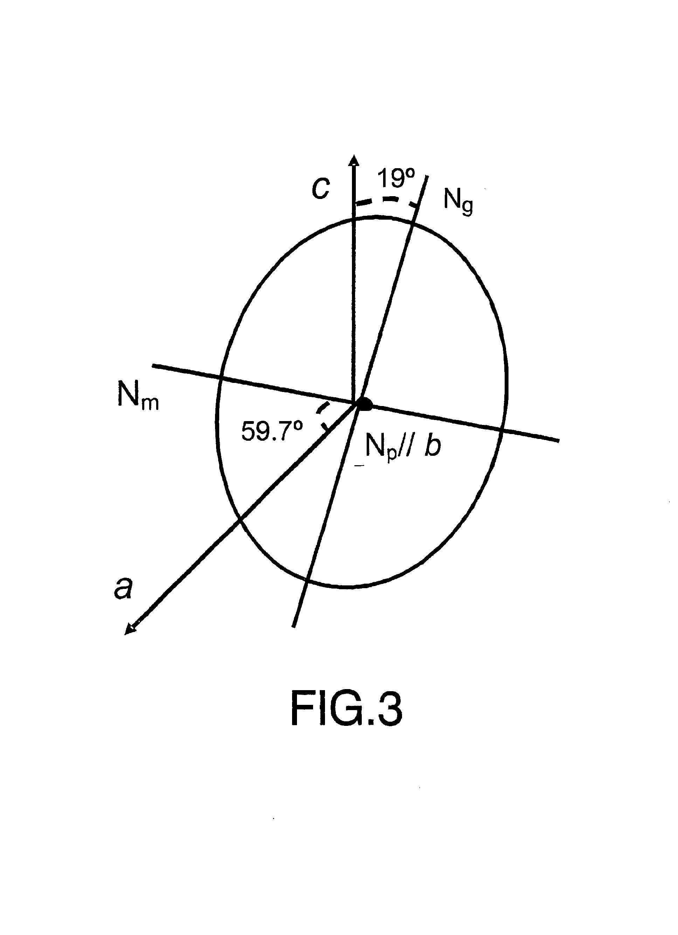

As can be seen from Figure 3, and accordingly with its monoclinic nature, the main optical axes are shifted from the crystallographic axes of the material. In particular, the main optical axis Ng is located at a 19° angle clockwise from the crystallographic axis *c*, being the positive crystallographic axis *b* emerging from the drawing. As a result, the main optical axis Nm is located at 59.7° from the crystallographic axis *a* turning clockwise towards *c*. Lastly, the main optical axis Np is parallel to the crystallographic axis *b* [see Figure 3].

### 1.4.2 Transparency range

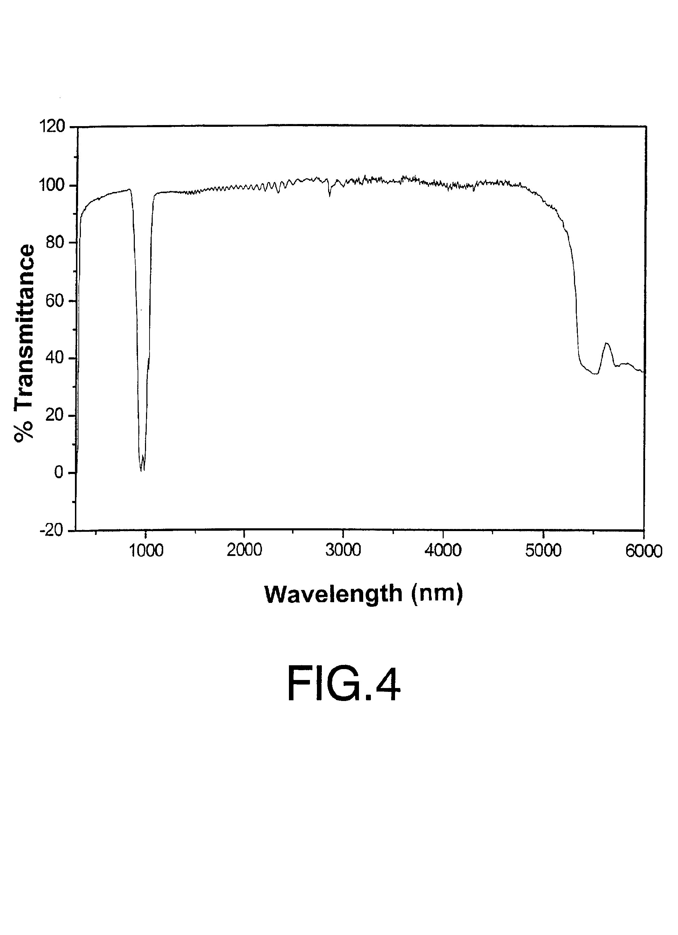

The transparency range of the KYbW obtained ranges from 330 nm, to 5,300 nm, clearly absorbing between 820 and 1,100 nm, as shown in Figure 4.

### 1.4.3 Optical absorption of KYbW

KYbW shows a single optical absorption multiplet. The main absorption band is due to ytterbium, the lattice constituent lanthanide. The optical absorption of ytterbium is located in the range from 820 to 1,100 nm of the spectrum and is due to the electronic transition ⁴F_{7/2} → ⁴F_{5/2}. Yb³⁺ shows a single absorption multiplet due to its electronic configuration 4f¹³ which only shows one excited state, ⁴F_{5/2}. The optical absorption experiments were carried out on KYbW sheets sectioned perpendicularly to the crystallographic axis *b* and with a 200 µm thickness.

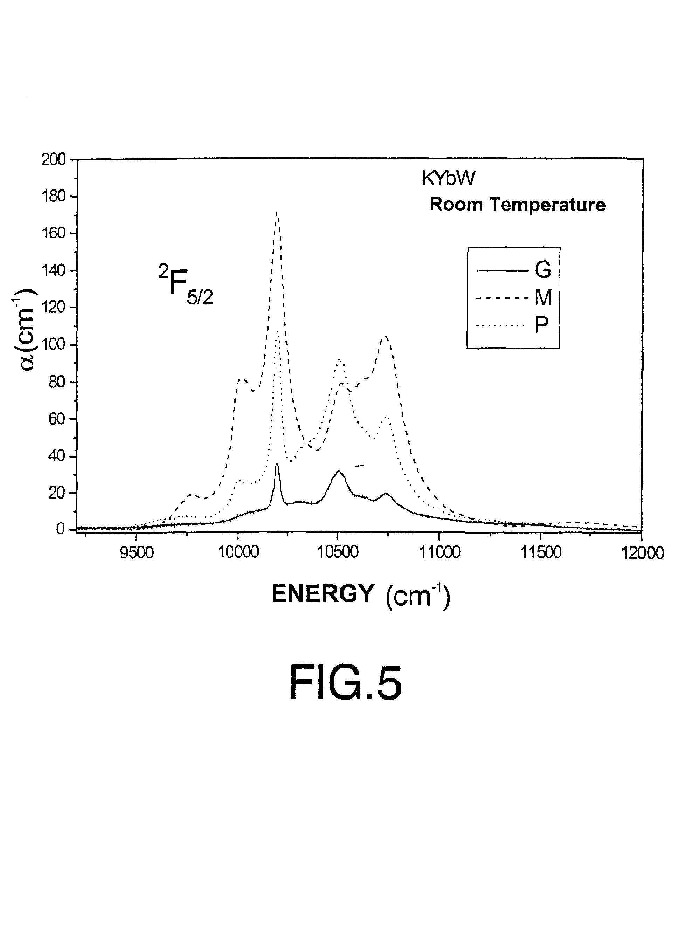

Figure 5 shows the optical absorption spectrum of KYbW performed at room temperature in the range from 300 to 3,000 nm (33,333-3,333 cm²). The meaning of "G", "M" and "P" in said figure indicates that the spectra have been performed under light polarized in the direction parallel to the main optical direction N_{g}, Nₘ and Nₚ respectively, of the KYbW lattice.

### 1.4.4 KYbW Emission

Under laser radiation, using a diode laser with λ = 982 nm, the KYbW single crystal emits blue luminescent radiation which can be used in the development of both low and medium energy, and even for high energy diode pumped blue solid state lasers. Measurements on the half life have been carried out at room temperature. The result is shown in Table 4.

**Table 4**

| **KYbW half life** | | | |
|---|---|---|---|
| | λₚ (nm) | λₑ (nm) | τ(µs) |
| KYbW | 982 | 480 (blue) | 300 |

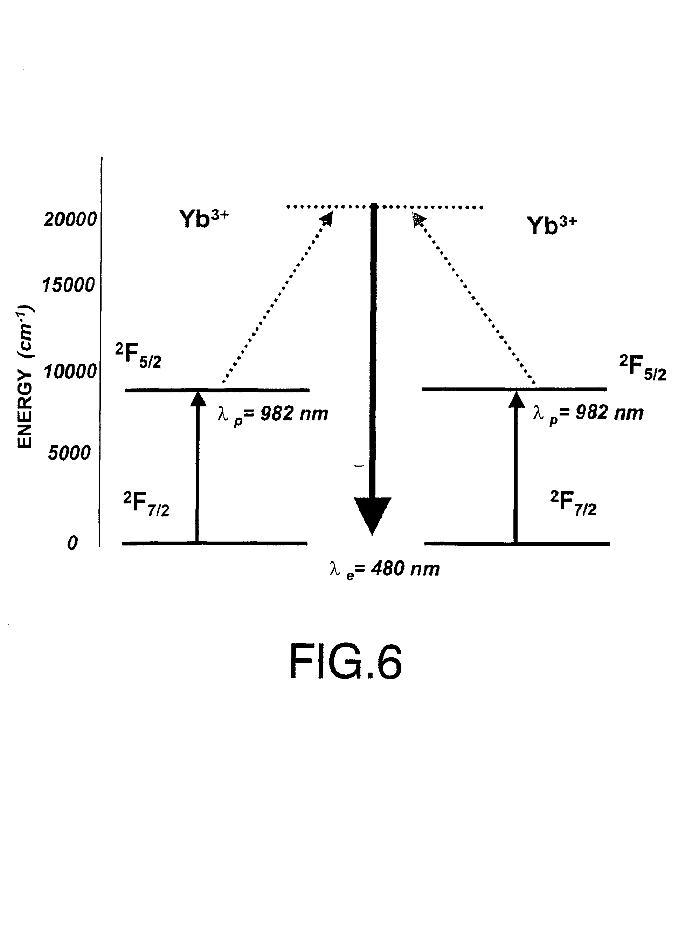

A possible explanation of said effect is disclosed in the outline shown in Figure 6.

### EXAMPLE 2

### KYbW crystals doped with Er³⁺

### 2.1 Obtainment of KYbW:Er³⁺ crystals

KYbW crystals doped with erbium [KYbW:Er³⁺] have been obtained following the methodology used for the obtainment of the non-doped KYbW crystals [Example 1.1], but adding to the mixture of reactants the adequate amount of erbium oxide (Er₂O₃) in order to insert the doping amount intended. The raw materials and the amounts of the same used are detailed in Table 5.

**Table 5**

| % Er atoms in solution | % Er atoms in crystal | K₂CO₃ (g) | Yb₂O₃ (g) | Er₂O₃ (g) | WO₃ (g) |
|---|---|---|---|---|---|
| 0.1 | 0.12 | 11.05 | 1.92 | 1.9 x 10⁻³ | 39.32 |
| 0.5 | 0.6 | 11.09 | 1.92 | 9.4 x 10⁻³ | 39.48 |
| 1 | 1.2 | 11.14 | 1.92 | 0.019 | 39.69 |
| 3 | 3.6 | 11.38 | 1.92 | 0.058 | 40.51 |
| 5 | 6 | 11.62 | 1.92 | 0.098 | 41.36 |
| 10 | 12 | 12.26 | 1.92 | 0.21 | 43.65 |
| 15 | 18 | 12.98 | 1.92 | 0.33 | 46.22 |
| 20 | 24 | 13.80 | 1.92 | 0.47 | 49.12 |

KYbW:Er³⁺ shows a range of saturation temperature as a function of the percentage of erbium ranging from 1,171 and 1,176 K.

In a particular embodiment, with the solution used and the growth method carried out, the doping distribution coefficient in KYbW is greater than 1.

### 2.2 KYbW:Er³⁺ spectroscopy

### 2.2.1 Optical absorption of KYbW:Er³⁺

The optical absorption of KYbW:Er³⁺ has been carried out in the range of the spectrum from 300 to 3,000 nm. The optical anisotropy of the material has been taken into account performing the spectra with light polarized parallel to the three aforementioned main optical directions. The spectra have been carried out at 6 K in order to avoid the absorption interferences due to thermal vibrations and also due to the population of the sublevels of the ground state.

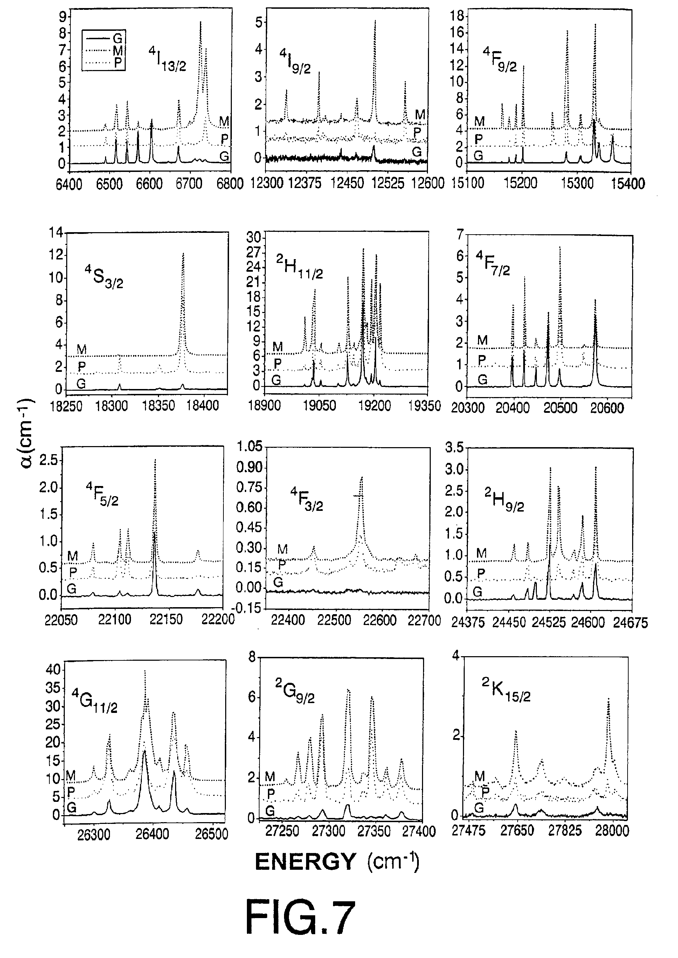

The optical absorption spectra of KYbW:Er³⁺ are presented in Figure 7, which shows all the characteristic absorptions of the erbium ion in the range from 6,000 - 30,000 cm⁻¹. All the absorption multiplets are characteristics of erbium within this lattice, but even so, the more meaningful multiplets for the obtainment of green emission are those comprised in the 6,000 - 21,000 cm⁻¹ interval. The meaning of "G", "M" and "P" in said figure indicates that the spectra have been performed with light polarized in the direction parallel to the main optical direction N_{g}, Nₘ and Nₚ respectively, of the KYbW lattice.

### 2.2.2 Green luminescent emission

KYbW:Er³⁺ emits green light (λ = 530 nm), after being pumped with laser radiation by means of a λ= 982 nm diode laser.

Measurements on the half life have been carried out at room temperature and the result is shown in Table 6.

**Table 6**

| **KYbW:Er**^{**3+**} **half life** | | | |
|---|---|---|---|
| | λₚ (nm) | λₑ (nm) | τ(µs) |
| KYbW:Er [Er³⁺]: 6.52. 10¹⁹ at/cm³ | 982 | 530 (green) | 300 |

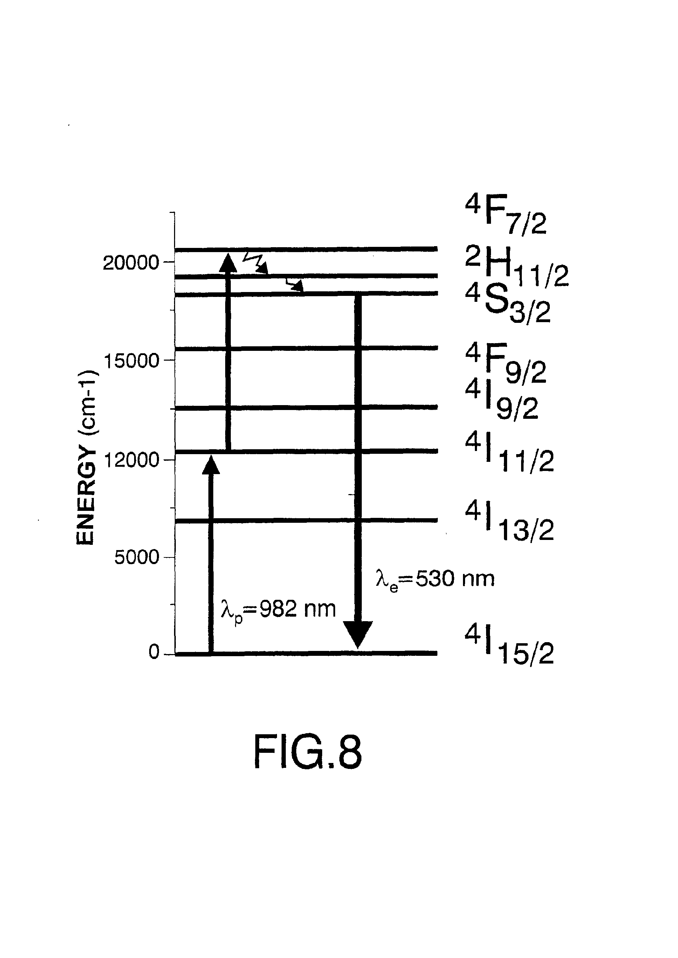

A possible interpretation of the emission of green light is disclosed in the outline shown in Figure 8.

## Claims

1. A potassium ytterbium double wolframate single crystal, of formula KYb(WO₄)₂, optionally doped with one or more ions of the rare earth elements.

2. A potassium ytterbium double wolframate single crystal, according to claim 1, of formula KYb(WO₄)₂, whose crystallographic structure belongs to the monoclinic system, spatial group C2/c.

3. A potassium ytterbium double wolframate single crystal, according to claim 2, whose unit cell parameters are: a = 10.590(4) A, b = 10.290(6) A, c = 7.478(2) A and β = 130.70(2)°, with Z = 4.

4. A potassium ytterbium double wolframate single crystal, according to claim 2, whose morphology shows a crystal habit comprising the faces (110), (111), (010) and (310).

5. A potassium ytterbium double wolframate single crystal, according to claim 2, wherein the positive crystallographic axis *b* emerges from the drawing (Figure 3); the main optical axis Ng is located at a 19° angle clockwise from the crystallographic axis *c*; the main optical axis Nm is located at 59.7° from the crystallographic axis *a* turning clockwise towards *c*; and the main optical axis Np is parallel to the crystallographic axis *b*.

6. A potassium ytterbium double wolframate single crystal, according to claim 2, which shows optical absorption in the 820 - 1,100 nm range.

7. A potassium ytterbium double wolframate single crystal, according to claim 2, which luminescently emits blue light (λ= 480 nm) when pumped with infrared radiation of λ= 982 nm.

8. A potassium ytterbium double wolframate single crystal, according to claim 1, of formula KYb(WO₄)₂, doped a lanthanide element ion.

9. A potassium ytterbium double wolframate single crystal, according to claim 8, in which the amount of doping element present in said doped KYbW single crystal ranges from 0,1% to 20% atoms of the doping element vs. potassium and ytterbium.

10. A potassium ytterbium double wolframate single crystal, according to claim 8, wherein said lanthanide element is erbium.

11. A potassium ytterbium double wolframate single crystal, according to claim 10, wherein the erbium doping distribution coefficient in KYbW is greater than 1.

12. A potassium ytterbium double wolframate single crystal, according to claim 8, which luminescently emits green light (λ= 530 nm) when pumped with infrared radiation of λ= 982 nm.

13. A procedure for the production of a potassium ytterbium double wolframate single crystal, of formula KYb(WO₄)₂, optionally doped with one or more ions of the rare earth elements, according to any of the claims 1 through 12, which comprises the mixing and dissolving of the raw materials forming a solution comprising a solvent and a solute, at a temperature above the saturation temperature, for an appropriate period of time, to obtain a homogeneous solution which shows both an axial and radial thermal gradient which favors the nucleation on the center of the surface of the solution, introducing a KYbW seed held onto an alumina rod and fastened with platinum wire, and place it on the center of the surface of the solution in order to focus the crystalline growth on this single spot and slowly cool down the solution, in order to achieve the supersaturation of the solution and the formation of the single crystals which are withdrawn from the solution and are slowly cooled down to room temperature.

14. A green or blue emitting solid state laser, pumped by an infrared radiation diode comprising a potassium ytterbium double wolframate single crystal, of formula KYb(WO₄)₂, optionally doped with one or more ions of the rare earth elements, according to any of the claims 1 through 12.
